# EUROPEAN PATENT SPECIFICATION

(11) **EP 3 749 798 B1**
(45) Date of publication and mention of the grant of the patent: **18.10.2023**
(21) Application number: 19708171.4
(22) Date of filing: 07.02.2019
(51) Int. Cl.: D01G 11/00, D06H 7/22

(54) **MACHINE FOR RECYCLING QUILTS**
MASCHINE ZUM RECYCLEN VON STEPPDECKEN
MACHINE POUR LE RECYCLAGE DE TEXTILES MATELASSÉS

(30) Priority: 08.02.2018 IT 201800002502
(43) Date of publication of application: 16.12.2020
(73) Proprietor: Trovi, Roberto, 51039 Quarrata (Pistoia) (IT); Dolfin, Franco, 41058 Vignola (MO) (IT); Tonini, Piero, 51100 Pistoia (IT); Caso, Antonio, 51100 Pistoia (IT)
(72) Inventor: Trovi, Roberto, 51039 Quarrata (Pistoia) (IT); Dolfin, Franco, 41058 Vignola (MO) (IT); Tonini, Piero, 51100 Pistoia (IT); Caso, Antonio, 51100 Pistoia (IT)
(74) Representative: Firmati, Leonardo
(86) International application number: PCT/IB2019/050986
(87) International publication number: WO 2019/155395

(56) References cited:
- EP-A2- 0 826 813
- WO-A1-01/31096
- WO-A1-2013/189956
- JP-A- H 108 361

## Description

### Technical field

This invention relates to the field of quilts.

More specifically, the invention relates to a machine and a method for recycling quilts.

### Background art

The quilting of textile products is a production process carried out by linking together textile structures, by means of suitably positioned and spaced stitches, which often also comprise support or padding materials. The quilting allows multilayer or padded textile products to be made which are embellished with the selection of textures and patterns defined by the switching on the outer layers.

It is therefore a very widespread process for making of goods which are aesthetically pleasing, such as: furnishing fabrics, non-woven fabrics for padding, mattresses, bedspreads, baby items and fashion items.

Due to the large diffusion of quilted products, and thus the volume and the value of the materials which they use, the need is increasingly felt to find new methods for their recycling and for simplifying the existing processes, to favour the re-use of the parts and the fibres contained therein once they have reached the end of their life.

Is also known that the industrial production of quilted products and the use of the same quilted products for the industrial production of goods generates a significant quantity of industrial waste, comprising fabrics and non-fabrics which are often in excellent condition, sewn together in layers. In particular, the multi-needle machines for quilting fabrics for mattresses require, to obtain a good quality result, the cutting of a significant edge portion of the product produced and its rejection.

For economic and environmentally-friendly reasons, it would always be preferable to recycle the waste cuttings deriving from industrial production of quilts, but in order to do so it is necessary separate the layers and the padding, in such a way as to direct each of these to the specific area for recycling.

Disadvantageously, removal or cutting the stitching between the various layers which make up a quilted product is a complicated and laborious operation, which risks irreversibly damaging or deforming the various layers to be reused. Due to the cost and time related to the operation for separating the various layers, it is quite common to completely abandon both the recycling of quilted products at the end of their life and the production offcuts, which are generally discarded in the form of waste, with a significant economic and environmental cost linked to the processing of this waste, both for the individual and for the general public.

Patent documents WO2013189956 and EP0826813 disclose known examples of quilt recycling apparatus.

### Disclosure of the invention

In this context, the technical purpose which forms the basis of the invention is to provide a machine and a method for recycling quilts which overcome at least some of the above-mentioned drawbacks of the prior art.

More specifically, the aim of the invention is to provide a machine and a method for recycling quilts which is able to reduce the work load, the complexity and the economic cost of recycling quilts.

A further aim of this invention is to provide a machine and a method for recycling quilts which is able to reduce the environmental impact of the production of quilts and encourage their recycling.

The technical purpose indicated and the aims specified are substantially achieved by a machine for recycling quilts, comprising the technical features described in one or more of the accompanying claims. The dependent claims correspond to possible different embodiment of the invention.

Further features and advantages of this invention are more apparent from the non-limiting description which follows of a preferred non-limiting embodiment of a machine for recycling quilts.

### Brief description of the drawings

The description is set out below with reference to the accompanying drawings which are provided solely for purposes of illustration without restricting the scope of the invention and in which:
- Figure 1 shows a schematic view of a machine for recycling quilts made according to the invention in a configuration of use;
- Figure 2 shows a schematic view of an alternative embodiment in accordance with the invention;
- Figure 3 shows a construction detail of the machine of Figures 1 and 2.

### Detailed description of preferred embodiments of the invention

With reference to the drawings, a machine for recycling quilts, according to the invention, is denoted in its entirety by the reference numeral 100.

The machine 100 is configured for processing recyclable quilts. The term "recyclable quilts" generically means quilts comprising a plurality of layers joined together by a stitching comprising at least one heat-sensitive sewing thread.

The quilt 1 comprises at least an upper layer 10 and a lower layer 20, preferably made of fabrics for furnishing and bedding items such as, for example, cotton, linen, silk, synthetic fibres or a combination of these. Both the upper layer 10 and the lower layer 20 may be formed by a single piece of fabric or comprise a plurality of pieces of fabric sewn together. They may also consist of non-woven fabrics, for example spunbonded, or equivalent materials such as leather, faux leather and leatherette.

The quilt 1 also comprises a padding 30 interposed between the upper layer 10 and the lower layer 20 and made, for example, of goose plumage or cellulose wadding or other natural or synthetic fibres.

The upper layer 10 and lower layer 20, located on respective opposite sides of the padding 30, are joined by means of a stitching 40, which constrains them along predetermined lines and it is formed by a plurality of stitches, distributed along the above-mentioned predetermined lines. The stitching 40 is configured in such a way as to enclose and compress the padding 30 between the two upper 10 and lower 20 layers by means a variable force according to the desired properties of softness, weight and elasticity and the type of padding 30 used.

The stitching 40 of the quilts 1 configured for recycling using the machine 100 comprises a heat-sensitive sewing thread, that is to say, characterised by a change of state or softening temperature approximately between 50°C and 200°C, preferably between 70°C and 140°C, however significantly less than a temperature of degradation, change of state or combustion of the rest of the quilt 1. Depending on the embodiment, the stitching 40 may be made entirely of heat-sensitive sewing thread or from a combination of sewing threads, of which at least one heat-sensitive, to form a plurality of stitched points configured in such a way that the dissolution of the heat-sensitive sewing thread allows the fast break up of the stitching 40.

The machine 100 comprises an infeed station 110, configured to receive as input a quilt 1 of the type described above and convey it towards subsequent processing stations. In a preferred but non-limiting embodiment, the machine 100 is configured for the connection in line with a quilting machine in such a way as to automatically receive as input fabric waste cuttings produced by the quilting machine. This solution is particularly suitable for multi-needle quilting machines for mattresses, which produce a large quantity of waste cuttings.

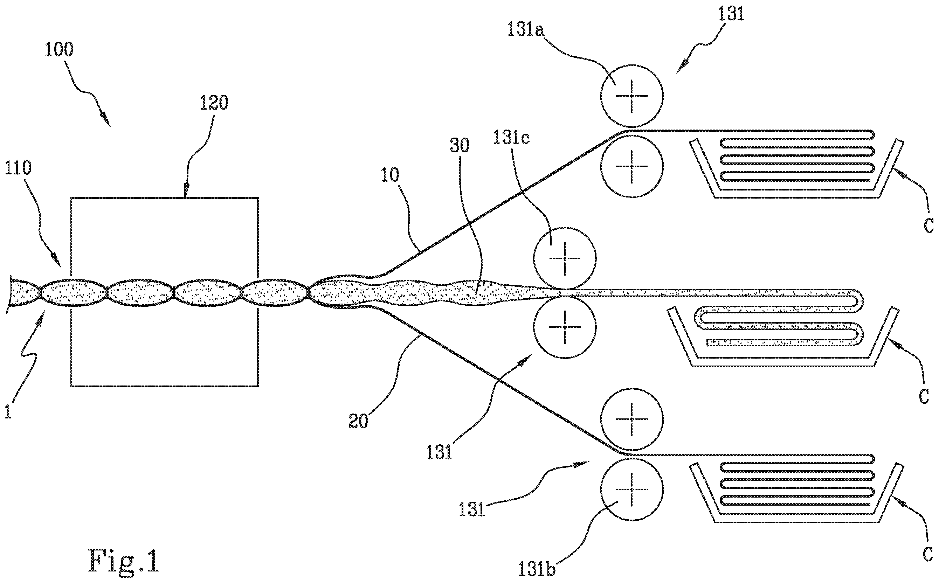

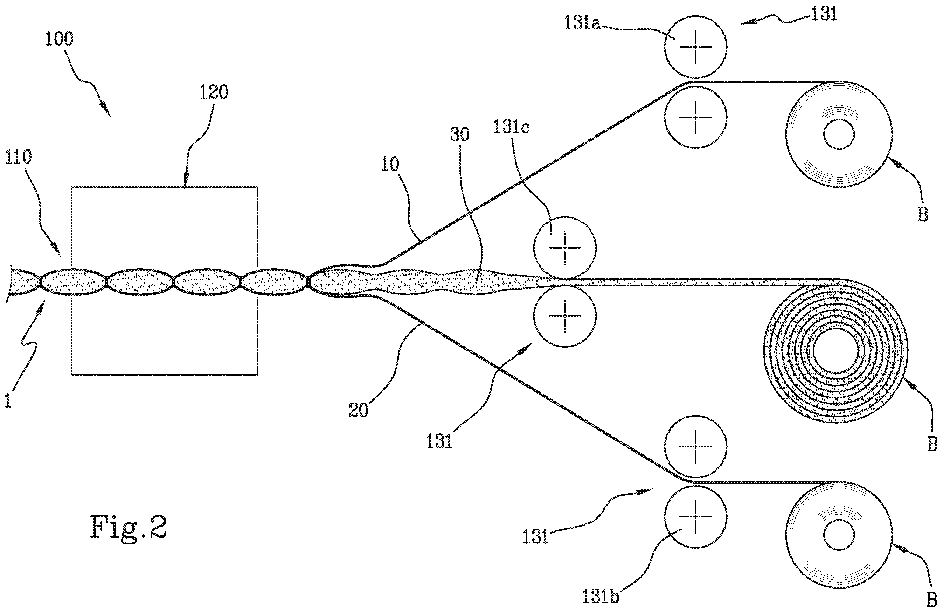

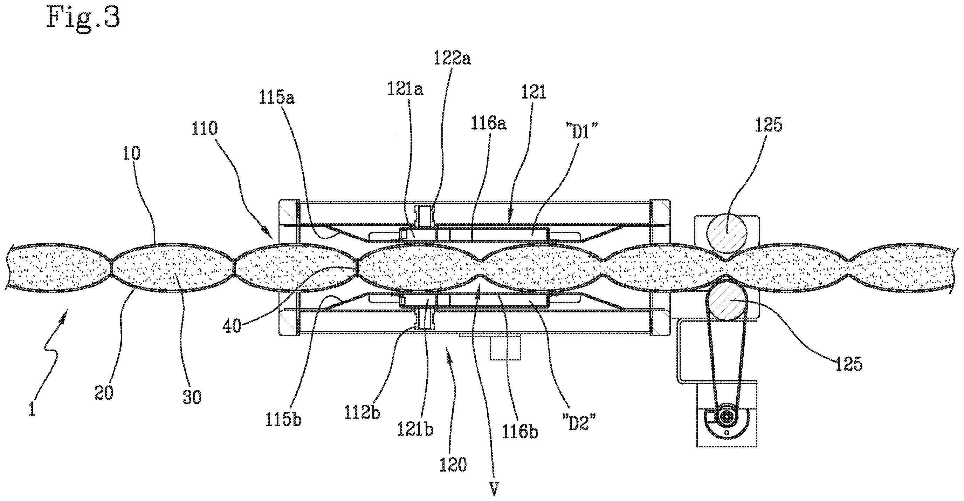

The machine 100 also comprises a heating station 120, connected in line with the infeed station 110, shown schematically in Figures 1 and 2 and in detail in Figure 3. The heating station 120 comprises heating means 121, acting on a heating space 'V' designed to contain a portion of the quilt 1 coming from the infeed station 110.

The heating means 121 are configured to increase the temperature of the stitching 40, and in particular of the above-mentioned heat-sensitive sewing thread, to a of change of state or softening temperature of it, without damaging the other components of the quilt 1. They are therefore configured for heating the above-mentioned stitching 40 to a temperature higher than a change of state or softening temperature of the heat-sensitive sewing thread and lower than a temperature of degradation of the rest of the quilt 1, wherein the other components are subject to changes of state or combustion. Preferably, the temperature is between 50° and 200°C, preferably between 70°C and 140°C.

The machine 100 also comprises supporting means 115 adapted to convey the quilt 1 coming from the infeed station 110 into the heating space 'V'. The support means 115 comprise opposite walls 115a and 115b, facing and converging towards the heating space 'V'. Preferably, the heating means 121 comprise an upper heating device 121a and a lower heating device 121b, associated with the supporting means 115 positioned on opposite sides of the heating space 'V'.

In the preferred embodiment, the heating means 121 comprise steam diffusers at a temperature; in alternative embodiments they comprise infrared lamps and/or inductive coils.

In the embodiment illustrated, the supporting means 115 comprise a pair of perforated walls 116a and 116b, located on opposite sides of the heating space 'V' to allow the passage of steam at temperature towards it. Preferably, the upper 121a and lower 121b heating devices comprise respective collectors 122a and 122b, connectable to a source of steam at a temperature. Moreover, they define respective diffusion chambers 'D1' and 'D2' in fluid communication with the above-mentioned collectors 122a and 122b and with the holes of the perforated portions 116a and 116b.

In an embodiment not illustrated, the heating means 121 comprise a system for adjusting the distance of the steam diffusers from the heating space 'V', in such a way as to adjust the intensity of the jet which reaches the quilt 1 and the size of the surface in question.

Preferably, the heating means 121 comprise a sensor configured for detecting the presence of material in the heating space 'V' or in the infeed station 1 10 and directed towards the heating station 120. The sensor is connected to a control unit configured to control the heating means 121 as a function of a signal coming from the sensor, in such a way as to activate a heating action at the arrival of a quilt 1 in the heating space 'V' and deactivate it when there is no quilt 1 in the above-mentioned space.

Advantageously, the heating means 121 are configured to cause a softening or at least partial dissolution of the stitching 40 in such a way as to neutralise or significantly weaken the joining action of the various layers of the quilt 1 , so as to allow a separation of the layers by a pulling of each in divergent directions, without this casing significant damage.

The machine 100 also comprises a pair of drive rollers 125, facing each other in a counter-rotating fashion and configured to move the quilt 1 through the heating station 120. In the embodiment illustrated, one of the drive rollers 125 is motor-driven whilst the other is pulled.

Subsequently, the machine 100 comprises a separating station 130, wherein the traction means 131, act on the layers of the quilt 1 for moving them in a divergent direction and separating them from each other, after the stitching 40 joining the layers has been dissolved in the heating station 120.

The traction means 131 comprise a pair of motor-driven rollers for each layer of the quilt 1, in particular two pairs of rollers 131 a and 131 b acting respectively on the upper layer 10 and the lower layer 20. The traction means 131 comprise another pair of rollers 131 c acting on the padding 30.

Advantageously, in the configuration of use of the machine 100, the traction means 131 are configured to direct the various layers of the quilt 1 towards a zone for compacting them.

Preferably, the machine 100 is configured for conveying the layers of the quilt 1, after the separation, into a respective storage space, preferably defined by external containers 'C', as illustrated in Figure 1. In an alternative embodiment, illustrated in Figure 2, the machine 100 is configured to wind the layers of the quilt 1 on respective winding reels 'B', for storing them.

A method for recycling quilts can be implemented using the machine 100 described above.

Preferably, the method is applicable to waste cuttings produced by quilting machines and comprises a first step of picking up a quilt 1 of the type described above from a quilting machine. Alternatively, the method may applied to finished quilts, to be recycled as they are worn or damaged, and in this case the above-mentioned step is omitted.

The method comprises a step of moving a quilt 1, of the type described above, through a heating space 'V' and a step of heating the stitching 40 to a of change of state or softening temperature of a heat-sensitive sewing thread of which it is composed, using the methods described above relative to the machine 100.

Preferably, the step of heating the stitching 40 is achieved by directing a jet of steam towards an upper surface, or a lower surface, of the quilt 1, or a step of directing a jet of steam towards both the surfaces of the quilt 1. The method then comprises a step of mutually separating the layers of the quilt 1, preferably by pulling the above-mentioned layers in divergent directions.

Lastly, the method comprises a step of placing the various layers in respective containers 'C' or wrapping them layers around respective winding reels 'B'.

The present invention achieves the preset aims, overcoming the disadvantages of the prior art. More specifically, the machine described above allows the mutual separation of the various layers of a recyclable quilt, specifically made for this type of application.

Advantageously, the possibility of separating the layers of the quilted fabrics allows an economically worthwhile recycling, limiting the economic and environmental costs linked to their disposal.

## Claims

1. A machine (100) for recycling quilts, comprising:
- an infeed station (1 10) configured to receive as input a quilt (1) comprising a plurality of layers (10, 20, 30) joined by a stitching (40) in which quilt (1) a padding (30) is interposed between an upper layer (10) and a lower layer (20),
- a heating station (120), comprising heating means (121) acting on a heating space (V) designed to contain a portion of the quilt (1), the heating means (121) being configured to increase the temperature of the stitching (40) to a change of state or softening temperature of at least one heat-sensitive sewing thread of the stitching (40); **characterized by**
- a pair of drive rollers (125), facing each other in a counter-rotating fashion and configured to move said quilt (1) through the heating station (120), at least one of the drive rollers (125) being motor-driven,
- supporting means (115) adapted to convey the quilt (1) coming from the infeed station (110) into said heating space (V), said supporting means (115) comprising opposite walls (115a, 115b) facing and converging towards the heating space (V),
- also comprising a separating station (130) downstream of the heating station (120), the separating station (130) comprising traction means (131), acting on the plurality of layers (10, 20, 30) for moving the layers (10, 20, 30) in respective diverging directions and separating them from each other, after the stitching (40) has been heated in the heating station (120), said traction means (131) comprising two pairs of motor-driven rollers (131a, 131b) acting respectively on the upper and lower layers and another pair of rollers (131c) acting on the padding (30).

2. The machine (100) according to claim 1, wherein the heating means (121) comprising an upper heating device (121a) and a lower heating device (121 b), the heating station (120) defining the heating space (V) between the upper heating device (121a) and the lower heating device (121b).

3. The machine (100) according to any one of the preceding claims, wherein the heating means (121) comprise steam diffusers at a temperature.

4. The machine (100) according to claim 3, wherein the heating means (121) comprise a system for adjusting the distance of the steam diffusers from the heating space (V).

5. The machine (100) according to any one of the preceding claims, wherein the heating means (121) comprise a sensor designed to detect the presence of the quilt (1) in the infeed station (110) or in the heating station (120), or upstream of the stations (110, 120), a control unit being configured controlling a heating action of the heating means (121) as a function of a signal coming from the sensor.

6. The machine (100) according to any one of the preceding claims, configured for conveying at least one of the layers (10, 20, 30), after the separating station (130), to a respective storage space, defined by an external container (C).

7. The machine (100) according to any one of the preceding claims, wherein the heating means (121) are designed for heating the stitching (40) to a temperature of between 50°C and 200°C, preferably between 70°C and 140°C.

## Patentansprüche

1. Maschine (100) zum Recyceln von Steppdecken, umfassend:
- eine Zuführungsstation (110), die ausgelegt ist, um als Eingabe eine Steppdecke (1) zu erhalten, umfassend eine Vielzahl von Schichten (10, 20, 30), die durch eine Naht (40) miteinander verbunden sind, wobei bei dieser Steppdecke (1) eine Füllung (30) zwischen einer oberen Schicht (10) und einer unteren Schicht (20) eingelegt ist;
- eine Heizstation (120), die Heizmittel (121) umfasst, die auf einen Heizraum (V) wirken, der ausgestaltet ist, um einen Abschnitt der Steppdecke (1) zu enthalten, wobei die Heizmittel (121) ausgelegt sind, um die Temperatur der Naht (40) auf eine Zustandsänderung- oder Erweichungstemperatur von mindestens einem hitzeempfindlichen Nähfaden der Naht (40) zu erhöhen, **gekennzeichnet durch**
- ein Paar Antriebswalzen (125), die einander gegenläufig zugewandt und ausgelegt sind, um die Steppdecke (1) durch die Heizstation (120) zu bewegen, wobei mindestens eine der Antriebswalzen (125) motorbetrieben ist;
- Halterungsmittel (115), die dazu bestimmt sind, die von der Zuführungsstation (110) eintreffende Steppdecke (1) in den Heizraum (V) zu befördern, wobei die Halterungsmittel (115) gegenständige Wände (115a, 115b) umfassen, die dem Heizraum (V) zugewandt sind und hinführend zu diesem zusammenlaufen;
- zudem umfassend eine Trennstation (130), die nach der Heizstation (120) angeordnet ist, wobei die Trennstation (130) Traktionsmittel (131) umfasst, die auf die Vielzahl von Schichten (10, 20, 30) wirken, um die Schichten (10, 20, 30) in jeweilige auseinanderlaufende Richtungen zu bewegen und voneinander zu trennen, nachdem die Naht (40) in der Heizstation (120) erhitzt wurde, wobei die Traktionsmittel (131) zwei Paar motorbetriebener Walzen (131a, 131b) umfassen, die jeweils auf die obere und die untere Schicht wirken, und ein weiteres Paar von Walzen (131c), die auf die Füllung (30) wirken.

2. Maschine (100) nach Anspruch 1, wobei die Heizmittel (121) eine obere Heizvorrichtung (121a) und eine untere Heizvorrichtung (121b) umfassen, wobei die Heizstation (120) den Heizraum (V) zwischen der oberen Heizvorrichtung (121a) und der unteren Heizvorrichtung (121b) definiert.

3. Maschine (100) nach einem der vorhergehenden Ansprüche, wobei die Heizmittel (121) Dampfdiffusoren bei einer Temperatur umfassen.

4. Maschine (100) nach Anspruch 3, wobei die Heizmittel (121) ein System zum Regeln des Abstands der Dampfdiffusoren vom Heizraum (V) umfassen.

5. Maschine (100) nach einem der vorhergehenden Ansprüche, wobei die Heizmittel (121) einen Sensor umfassen, der ausgestaltet ist, um die Steppdecke (1) in der Zuführungsstation (110) oder in der Heizstation (120) oder vor den Stationen (110, 120) zu erfassen, wobei eine Steuereinheit ausgelegt ist, um eine Heizwirkung der Heizmittel (121) als eine Funktion eines vom Sensor eingehenden Signals zu steuern.

6. Maschine (100) nach einem der vorhergehenden Ansprüche, die ausgelegt ist, um mindestens eine der Schichten (10, 20, 30) nach der Trennstation (130) zu einem jeweiligen Speicherraum zu fördern, der durch einen externen Behälter (C) definiert ist.

7. Maschine (100) nach einem der vorhergehenden Ansprüche, wobei die Heizmittel (121) ausgestaltet sind, um die Naht (40) auf eine Temperatur zwischen 50 °C und 200 °C, vorzugsweise zwischen 70 °C und 140 °C, zu erhitzen.

## Revendications

1. Machine (100) de recyclage d'édredons, comprenant :
- une station d'alimentation (110) configurée pour recevoir en entrée un édredon (1) comprenant une pluralité de couches (10, 20, 30) reliées par une couture (40), dans lequel édredon (1) un rembourrage (30) est interposé entre une couche supérieure (10) et une couche inférieure (20),
- une station de chauffage (120), comprenant des moyens de chauffage (121) agissant sur un espace de chauffage (V) conçu pour contenir une partie de l'édredon (1), les moyens de chauffage (121) étant configurés pour augmenter la température de la couture (40) jusqu'à un changement d'état ou une température de ramollissement d'au moins un fil à coudre thermosensible de la couture (40) ; **caractérisée par**
- une paire de rouleaux d'entraînement (125), se faisant face de manière contrarotative et configurés pour déplacer ledit édredon (1) à travers la station de chauffage (120), au moins l'un des rouleaux d'entraînement (125) étant entraîné par un moteur,
- des moyens de support (115) adaptés pour transporter l'édredon (1) provenant du poste d'alimentation (110) dans ledit espace de chauffage (V), lesdits moyens de support (115) comprenant des parois opposées (115a, 115b) faisant face et convergeant vers l'espace de chauffage (V),
- comprenant également une station de séparation (130) en aval de la station de chauffage (120), la station de séparation (130) comprenant des moyens de traction (131), agissant sur la pluralité de couches (10, 20, 30) pour déplacer les couches (10, 20, 30) dans des directions divergentes respectives et les séparer l'une de l'autre, après que la couture (40) a été chauffée dans la station de chauffage (120), lesdits moyens de traction (131) comprenant deux paires de rouleaux motorisés (131a, 131b) agissant respectivement sur les couches supérieure et inférieure et une autre paire de rouleaux (131c) agissant sur le rembourrage (30).

2. Machine (100) selon la revendication 1, dans laquelle les moyens de chauffage (121) comprennent un dispositif de chauffage supérieur (121a) et un dispositif de chauffage inférieur (121b), la station de chauffage (120) définissant l'espace de chauffage (V) entre le dispositif de chauffage supérieur (121a) et le dispositif de chauffage inférieur (121b).

3. Machine (100) selon l'une quelconque des revendications précédentes, dans laquelle les moyens de chauffage (121) comprennent des diffuseurs de vapeur à une température.

4. Machine (100) selon la revendication 3, dans laquelle les moyens de chauffage (121) comprennent un système pour ajuster la distance des diffuseurs de vapeur par rapport à l'espace de chauffage (V).

5. Machine (100) selon l'une quelconque des revendications précédentes, dans laquelle les moyens de chauffage (121) comprennent un capteur conçu pour détecter la présence de l'édredon (1) dans la station d'alimentation (110) ou dans la station de chauffage (120), ou en amont des stations (110, 120), une unité de commande étant configurée pour commander une action de chauffage des moyens de chauffage (121) en fonction d'un signal provenant du capteur.

6. Machine (100) selon l'une quelconque des revendications précédentes, configurée pour transporter au moins l'une des couches (10, 20, 30), après la station de séparation (130), vers un espace de stockage respectif, défini par un conteneur externe (C).

7. Machine (100) selon l'une quelconque des revendications précédentes, dans laquelle les moyens de chauffage (121) sont conçus pour chauffer la couture (40) à une température comprise entre 50°C et 200°C, de préférence entre 70°C et 140°C.
